(19) Europäisches Patentamt
European Patent Office
Office européen des brevets

(11) Veröffentlichungsnummer: **0 160 226**
**A2**

(12) # EUROPÄISCHE PATENTANMELDUNG

(21) Anmeldenummer: **85103978.4**

(22) Anmeldetag: **02.04.85**

(51) Int.Cl.[4]: **C 09 B 43/28**
D 06 P 1/18

(30) Priorität: **28.04.84 DE 3415915**

(43) Veröffentlichungstag der Anmeldung:
**06.11.85 Patentblatt 85/45**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Dehnert, Johannes, Dr.**
**Ottweilerstrasse 2**
**D-6700 Ludwigshafen(DE)**

(72) Erfinder: **Juenemann, Werner, Dr.**
**Haidfeldweg 1 c**
**D-6702 Bad Duerkheim(DE)**

(54) **Disazofarbstoffe.**

(57) Die Erfindung betrifft Verbindungen der allgemeinen Formel I.

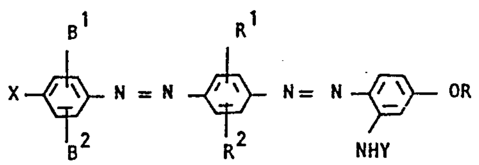

I,

in der

$B^1$ Wasserstoff, Methyl, Ethyl, Methoxy, Ethoxy oder Chlor,

$B^2$ Wasserstoff, Chlor, Brom, Methyl, Ethyl, Methoxy, Ethoxy, Phenoxy, Nitro oder Cyan,

$R^1$ Wasserstoff, Methyl, Ethyl oder $C_1$-bis $C_4$-Alkoxy,

$R^2$ Wasserstoff, Methyl, Ethyl oder $C_1$-bis $C_4$-Alkoxy oder

$R^1$ und $R^2$ zusammen ein annelierter Benzring,

R ein aliphatischer, cycloaliphatischer oder araliphatischer Rest,

X Wasserstoff, Methyl, Chlor, Nitro oder ein Rest der Formel

$OR^3$, 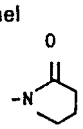 oder 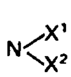 und

Y ein Rest der Formel $-COC_6H_5$, COOR oder 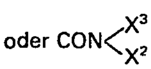

sind, wobei

$R^3$ einen aromatischen Rest oder einen Rest R,

$X^1$ einen Rest der Formel COR, CONHR oder COOR,

$X^2$ Wasserstoff oder gegebenenfalls substituiertes Alkyl oder Phenyl und

$X^3$ Wasserstoff oder gegebenenfalls substituiertes Alkyl bedeuten.

Die erfindungsgemäßen Farbstoffe eignen sich sehr gut zum Färben von Cellulose oder Polyestern oder Gemischen solcher Fasern.

EP 0 160 226 A2

Disazofarbstoffe

Die Erfindung betrifft Verbindungen der allgemeinen Formel I

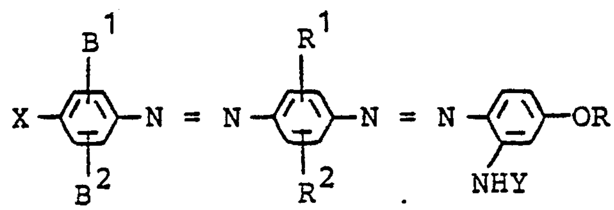 I,

in der

$B^1$ Wasserstoff, Methyl, Ethyl, Methoxy, Ethoxy oder Chlor,

$B^2$ Wasserstoff, Chlor, Brom, Methyl, Ethyl, Methoxy, Ethoxy, Phenoxy, Nitro oder Cyan,

$R^1$ Wasserstoff, Methyl, Ethyl oder $C_1$- bis $C_4$-Alkoxy,

$R^2$ Wasserstoff, Methyl, Ethyl oder $C_1$- bis $C_4$-Alkoxy oder

$R^1$ und $R^2$ zusammen ein annelierter Benzring,

R ein aliphatischer, cycloaliphatischer oder araliphatischer Rest,

X Wasserstoff, Methyl, Chlor, Nitro oder ein Rest der Formel $OR^3$, 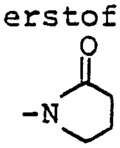 oder 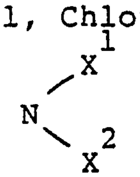 und

Y ein Rest der Formel $-COC_6H_5$, COOR oder 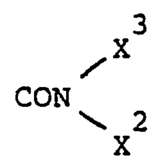 sind, wobei

$R^3$ einen aromatischen Rest oder einen Rest R,

$X^1$ einen Rest der Formel COR, CONHR oder COOR,

$X^2$ Wasserstoff oder gegebenenfalls substituiertes Alkyl oder Phenyl und

$X^3$ Wasserstoff oder gegebenenfalls substituiertes Alkyl bedeuten.

Alkoxyreste $R^1$ und $R^2$ sind z. B. Propoxy und Butoxy und insbesondere Ethoxy und Methoxy, wobei Methoxy bevorzugt ist.

Reste R sind beispielsweise $C_3$- oder $C_4$-Alkenyl, $C_1$- bis $C_{12}$-Alkyl, das noch durch Sauerstoff unterbrochen und durch Chlor, Cyan, $C_1$- bis $C_8$-Alkoxy oder gegebenenfalls substituiertes Phenyl substituiert sein kann oder Cycloalkyl mit 5 bis 8 C-Atomen.

Im einzelnen seien für R z. B. genannt:

$CH_3$, $C_2H_5$, n-$C_3H_7$, n-$C_4H_9$, n-$C_6H_{13}$, 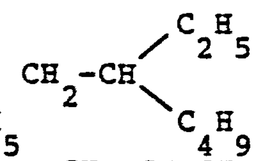, n-$C_8H_{17}$, n-$C_{10}H_{21}$, n-$C_{12}H_{25}$, 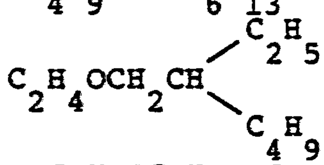, $CH_2$-CH=$CH_2$, $C_2H_4OCH_3$, $C_2H_4OC_2H_5$, $C_2H_4OC_3H_7$, $C_2H_4OC_4H_9$, $C_2H_4OC_6H_5$, $C_2H_4OC_6H_4$-$CH_3$, $C_6H_{11}$, $C_8H_{15}$, $CH_2$-$C_6H_5$, $CH_2$-$C_6H_4$-$CH_3$, $CH_2$-$C_6H_4$-Cl, $CH_2$-$CH_2$-$C_6H_5$, $CH_2CH_2CH_2C_6H_5$, $C_4H_8$-$OC_6H_5$, $C_2H_4OC_2H_4$-$OCH_3$, $C_2H_4OC_2H_4OC_6H_5$, $C_2H_4OC_2H_4OC_2H_5$ oder $C_2H_4OC_2H_4OC_4H_9$.

Aromatische Reste $R^3$ sind z. B. gegebenenfalls durch Chlor, Brom, Methyl, Ethyl, Methoxy oder Ethoxy substituiertes Phenyl.

Im einzelnen seien für $R^3$ z. B. genannt:

$CH_3$, $C_2H_5$, n-$C_3H_7$, n-$C_4H_9$, n-$C_6H_{13}$, 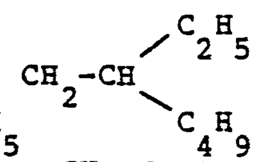, n-$C_8H_{17}$, n-$C_{10}H_{21}$, n-$C_{12}H_{25}$, 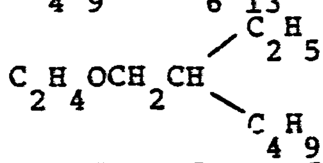, $CH_2$-CH=$CH_2$, $C_2H_4OCH_3$, $C_2H_4OC_2H_5$, $C_2H_4OC_6H_5$, $C_6H_{11}$, $C_6H_5$, $C_6H_4CH_3$, $C_6H_4Cl$, $C_6H_4C_2H_5$, $CH_2$-$C_6H_5$, $CH_2$-$C_6H_4$-$CH_3$, $CH_2$-$C_6H_4$-Cl, $CH_2$-$CH_2$-$C_6H_5$, $C_6H_4OC_2H_5$, $C_2H_4OC_2H_4OC_6H_5$, $C_6H_4$-Br.

Alkylreste für $X^2$ und $X^3$ haben vorzugsweise 1 bis 4 C-Atome, insbesondere sind Methyl, Ethyl, Propyl und Butyl zu nennen.

Zur Herstellung der Verbindungen der Formel I kann man z. B. in Verbindungen der Formel

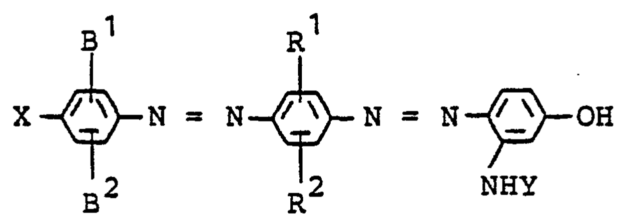

nach an sich bekannten Methoden den Rest R einführen. Einzelheiten der Herstellung der Verbindungen der Formel I können den Beispielen entnommen werden, in denen sich Angaben über Teile und Prozente, sofern nicht anders vermerkt, auf das Gewicht beziehen.

Die Farbstoffe eignen sich vorzugsweise zum Färben und Bedrucken von Polyestern und cellulosehaltigen Fasern und Mischgeweben aus Polyestern und Cellulose sowie reiner Cellulose.

Als Verfahren zur Applikation der Farbstoffe der Formel I eignen sich insbesondere die in der deutschen Patentschrift 18 11 796 und in den deutschen Patentanmeldungen DE-OS 25 24 243 und 25 28 743 sowie 28 55 188.4 beschriebenen Verfahren.

Von besonderer Bedeutung sind Verbindungen der Formel I a

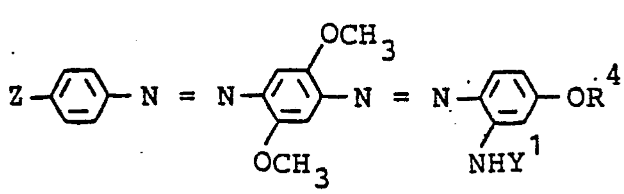 I a,

in der

$R^4$ einen aliphatischen oder araliphatischen Rest,

$Y^1$ einen Rest der Formel $COC_6H_5$, $COOC_1$- bis $C_8$-Alkyl, oder 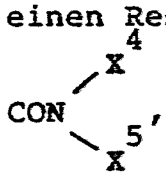, wobei das Alkyl gegebenenfalls durch Sauerstoff unterbrochen sein kann, und

Z $OC_6H_5$ oder 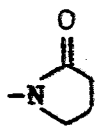 bedeuten, wobei

$X^4$ gegebenenfalls durch Sauerstoff unterbrochenes $C_1$- bis $C_8$-Alkyl oder Phenyl und

$X^5$ Wasserstoff oder $C_1$- bis $C_4$-Alkyl sind.

Beispiel 1

17 Teile des Farbstoffes der Formel

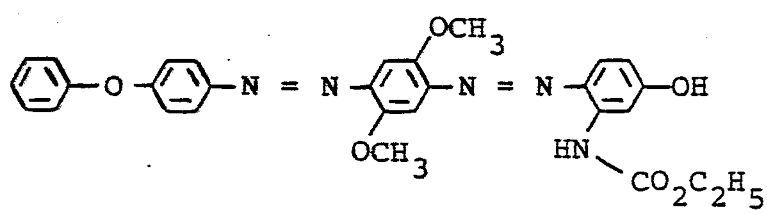

werden zusammen mit 13,62 Teilen $K_2CO_3$ und 10,17 Raumteilen n-Butylbromid sowie 100 Raumteilen N-Methylpyrrolidon-(2) 3 Stunden lang bei 80 °C gerührt. Dann läßt man abkühlen, saugt ab, wäscht mit Methanol und heißem Wasser und trocknet bei 50 °C im Vakuum. Es resultieren 11,5 g Farbstoffpulver der Formel

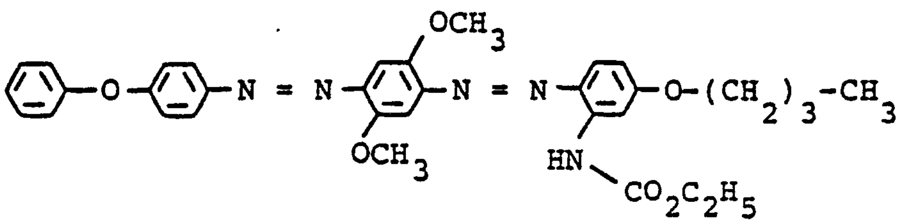

Man bedruckt ein Mischgewebe aus Polyester/Baumwolle mit einer Zubereitung, die aus 10 Teilen des obigen Farbstoffes, 100 Teilen des Umsetzungsproduktes aus Polyethylenoxid vom Molekulargewicht 300 mit Borsäure im Molvewrhältnis 3 : 1, 30 Teilen Ölsäurediethanolamid und 860 Teilen einer 3 %igen Alginatverdickung besteht und trocknet den Druck bei 110 °C. Darauf behandelt man 5 Minuten bei 185 °C mit Heißdampf, spült kalt und seift bei 100 °C mit einem handelsüblichen Waschmittel. Man erhält einen licht-, wasch- und lösungsmittelechten gelbstichig roten Druck auf weißem Fond.

Ein Gewebe aus 65 Teilen Polyesterfaser und 35 Teilen mercerisierter Baumwolle wird mit einer Flotte imprägniert, die 80 g/l einer 20 %igen, wäßrigen Zubereitung obigen Dispersionsfarbstoffes und 80 g/l eines Quell- und Farbstofflösemittels, bestehend aus 80 Teilen eines Polyethylenglykols mit einem Molekulargewicht von 1500 und 20 Teilen eines Umsetzungsproduktes aus 1 Mol Hexamethylendiamin und 15 Mol Ethylenoxid enthält.

Der pH-Wert der Flotte wird mit Zitronensäure auf 6 eingestellt. Das imprägnierte Gewebe wird 60 Sekunden bei 120 °C getrocknet und zur Fixierung des Farbstoffes weitere 60 Sekunden einer Temperatur von 215 °C ausgesetzt. Danach wird kalt und warm gespült und 20 Minuten bei 100 °C in Gegenwart eines handelsüblichen Waschmittels geseift. Man erhält eine gelbstichig rote Färbung mit guten Licht-, Wasch- und Reibechtheiten.

Beispiel 2

In 120 Raumteilen N-Methylpyrrolidon-(2) wird ein Gemisch von 0,5 g Kaliumjodid, 8,23 g Pottasche, 5,47 Raumteilen n-Propylbromid und 28 Teilen des Disazophenolfarbstoffes der Formel

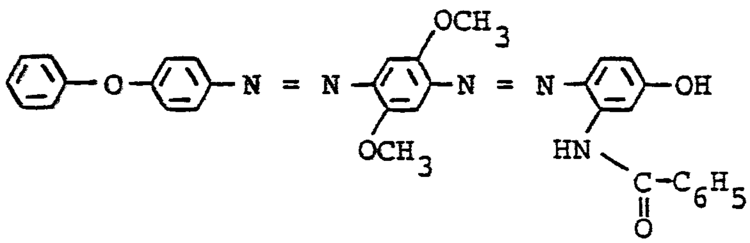

4 Stunden bei 80 °C gerührt; dann wird mit 700 Raumteilen Methanol und 50 Teilen Wasser gefällt, abgesaugt und mit Methanol und Wasser gewaschen. Nach dem Trocknen werden 23 Teile eines braunen Farbstoffpulvers der Formel

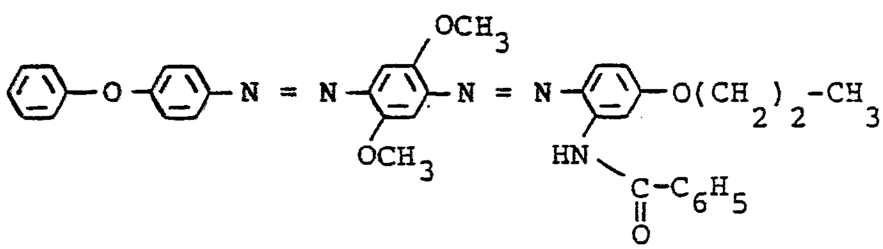

erhalten.

Ein Gewebe aus 65 Teilen Polyester-Faser und 35 Teilen mercerisierter Baumwolle wird mit einer Flotte imprägniert, die 10 g/l einer 20 %igen flüssigen Zubereitung des obigen Dispersionsfarbstoffes und 80 g/l eines Quell- und Farbstofflösungsmittels aus einer Mischung aus 3 Teilen Polyethylenglykol mit einem Molekulargewicht von 1500 und 1 Teil eines Umsetzungsproduktes aus 1 Mol Neopentandiamin und 15,6 Mol Ethylenoxid enthält. Der pH-Wert der Klotzflotte wird mit Glutarsäure auf 6 eingestellt. Das Gewebe wird mit der Klotzflotte imprägniert, wobei die Flottenaufnahme 45 % beträgt. Das Gewebe wird dann 60 Sekunden bei einer Temperatur von 120 °C getrocknet und 90 Sekunden bei 225 °C in einem kontinuierlich arbeitenden Labortrockner fixiert. Danach wird es kalt und warm gespült und 5 Minuten bei 100 °C in Gegenwart eines handelsüblichen Waschmittels gewaschen. Der Farbstoff ist fast vollständig auf dem Gewebe fixiert. Man erhält eine Rot-Färbung mit sehr guten Licht-, Wasch- und Reibechtheiten.

Beispiel 3

24 Teile des in Beispiel 2 genannten Disazophenolfarbstoffes werden in 100 Raumteilen N-Methylpyrrolidon-(2) zusammen mit 16,5 Teilen $K_2CO_3$, 0,5 Teilen Kaliumjodid und 16,3 Raumteilen 2-Phenoxyethylchlorid 3 Stunden bei 120 °C erhitzt. Dann wird abgekühlt und das Produkt durch Zugabe von 700 Raumteilen Methanol und 150 Teilen Wasser gefällt. Die Kristalle werden abgesaugt, mit Wasser gewaschen und bei 50 °C getrocknet. So werden 26 Teile eines Farbstoffes der Konstitution

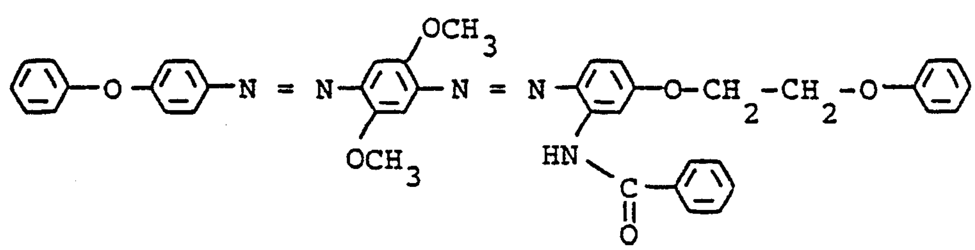

erhalten.

Ein Gewebe aus 67 Teilen Polyesterfaser und 33 Teilen Baumwolle (mercerisiert) wurde mit einer Flotte imprägniert, die 100 g/l einer Mischung aus 80 Teilen eines Borsäureesters von Polyethylenglykol (Molgewicht etwa 800) im Molverhältnis 1 : 3 und 20 Teilen Ethylendiamin, umgesetzt mit 35 Mol Ethylenoxid, enthielt. Die Flottenaufnahme betrug 80 %.

Anschließend wurde 15 Minuten bei 60 bis 70 °C getrocknet. Auf das Substrat wurde folgende Druckpaste gedruckt:

500 Teile wäßrige Stärkeether-Verdickung (10 %),
2 Teile Zitronensäure,
10 Teile m-nitrobenzolsulfonsaures Natrium,
50 Teile des obigen Farbstoffes und 438 Teile Wasser.

Der Druck wurde 2 Minuten bei 130 °C getrocknet und 90 Sekunden bei 210 °C mit Heißluft behandelt. Nach dem Spülen wird ein roter Druck auf weißem Fond erhalten, der gute Licht-, Wasch- und Reibechtheiten aufweist.

<u>Beispiel 4</u>

20,7 Teile des Farbstoffes der Formel

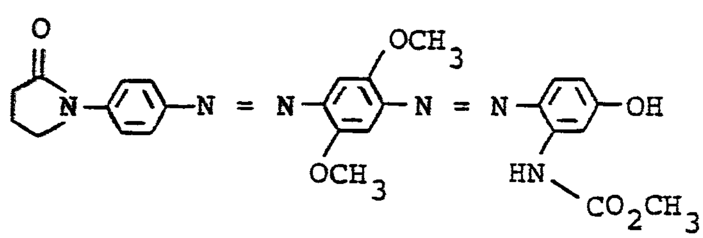

werden zusammen mit 100 Raumteilen N,N-Dimethylformamid, 13 Raumteilen n-Butylbromid sowie 17,4 Teilen Pottasche 3 Stunden lang bei 80 °C zur Reaktion gebracht. Man fällt mit wenig Methanol, saugt die Kristalle bei Raumtemperatur ab und wäscht sie mit Methanol und Wasser. Nach der Trocknung resultieren 18 g eines braunen Pulvers der Formel

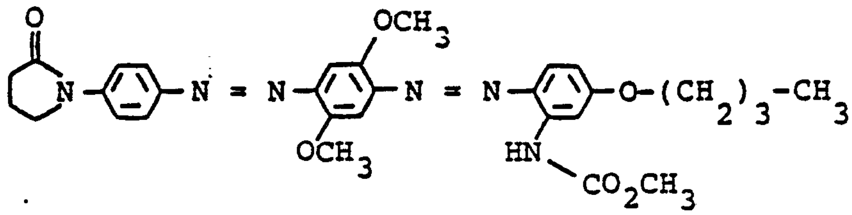

Man bedruckt ein Mischgewebe aus Polyester/Baumwolle (65 : 65) mit einer Paste, die aus 20 Teilen obigen Farbstoffes, 110 Teilen Polyethylenoxid vom Molekulargewicht 350, 30 Teilen Ölsäurediethyanolamid und 840 Teilen einer 10 %igen Alginatverdickung besteht. Man trocknet das bedruckte Material bei 100 °C und fixiert danach 60 Sekunden mit Heißluft bei 190 - 215 °C. Der Druck wird sodann kalt und warm gespült und bei 100 °C mit einem handelsüblichen Waschmittel geseift. Man erhält einen roten Druck auf weißem Fond mit guten Echtheiten.

Auf analoge Weise werden die folgenden Farbstoffe erhalten, die sich nach den angegebenen Methoden auf Baumwolle und Mischgewebe färben und drucken lassen und Färbungen mit guten Echtheiten ergeben.

Die in den folgenden Beispielen genannten Farbstoffe lassen sich wie folgt in eine handelsfähige Farbstoffzubereitung überführen.

30 Teile Farbstoff,
6 Teile Dispergiermittel,
10 Teile Wasserretentionsmittel,
1 Teil Desinfektionsmittel und ungefähr
53 Teile Wasser werden in einer Rührwerksmühle bis zu einer Teilchengröße von ungefähr 0,5 µ vermahlen. Man erhält so eine lagerstabile Dispersion des Farbstoffes.

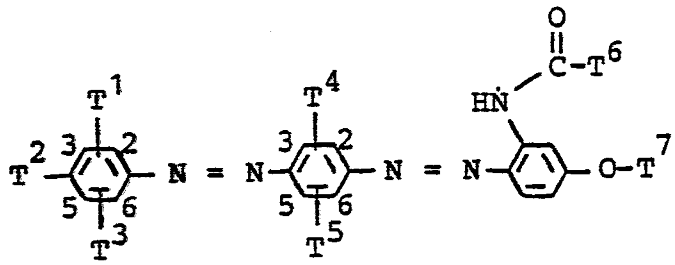 II

Die Substituenten $T^1$ bis $T^7$ der in der folgenden Tabelle aufgeführten Farbstoffe sowie die in den Tabellenspalten vorangestellten Indexzahlen entsprechen der Formel II.

| Bsp. | $T^1$ | $T^2$ | $T^3$ | $T^4$ | $T^5$ | $T^6$ | $T^7$ | Farbton |
|---|---|---|---|---|---|---|---|---|
| 5 | H | $-OC_6H_5$ | H | $2-OCH_3$ | $5-OCH_3$ | $-C_6H_5$ | $-CH_2-C_6H_5$ | gelbstichig rot |
| 6 | H | $-OC_6H_5$ | H | $2-OCH_3$ | $5-OCH_3$ | $-C_6H_5$ | $-C_2H_4-C_6H_5$ | " |
| 7 | H | $-OC_6H_5$ | H | $2-OCH_3$ | $5-OCH_3$ | $-C_6H_5$ | $-C_2H_5$ | " |
| 8 | H | $-OC_6H_5$ | H | $2-OCH_3$ | $5-OCH_3$ | $-C_6H_5$ | $-C_4H_9-(n)$ | " |
| 9 | H | $-OC_6H_5$ | H | $2-OCH_3$ | $5-OCH_3$ | $-C_6H_5$ | $-CH_2CH=CH_2$ | " |
| 10 | H | $-OC_6H_5$ | H | $2-OCH_3$ | $5-OCH_3$ | $-C_6H_5$ | $-C_6H_{13}-(n)$ | " |
| 11 | H | $-OC_6H_5$ | H | $2-OCH_3$ | $5-OCH_3$ | $-C_6H_5$ | $-C_2H_4OCH_3$ | " |
| 12 | H | $-OC_6H_5$ | H | $2-OCH_3$ | $5-OCH_3$ | $-C_6H_5$ | $-C_2H_4OC_2H_5$ | " |
| 13 | H | $-OC_6H_5$ | H | $2-OCH_3$ | $5-OCH_3$ | $-C_6H_5$ | $-C_2H_4OC_3H_7-(n)$ | " |
| 14 | H | $-OC_6H_5$ | H | $2-OCH_3$ | $5-OCH_3$ | $-C_6H_5$ | $-C_2H_4OC_4H_9-(n)$ | " |

| Bsp. | $T^1$ | $T^2$ | $T^3$ | $T^4$ | $T^5$ | $T^6$ | $T^7$ | Farbton |
|---|---|---|---|---|---|---|---|---|
| 15 | H | 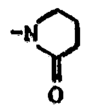 | H | $2-OCH_3$ | $5-CH_3$ | $-C_6H_5$ | $-CH_2C_6H_5$ | orange |
| 16 | H | " | H | $2-OCH_3$ | $5-CH_3$ | $-C_6H_5$ | $-C_2H_4OC_6H_5$ | " |
| 17 | H | " | H | $2-OCH_3$ | $5-CH_3$ | $-C_6H_5$ | $-C_2H_5$ | " |
| 18 | $2-OCH_3$ | $-OCH_3$ | 5-Cl | $2-OCH_3$ | $5-CH_3$ | $-C_6H_5$ | $-CH_2C_6H_5$ | rotorange |
| 19 | $2-OCH_3$ | $-OCH_3$ | 5-Cl | $2-OCH_3$ | $5-CH_3$ | $-C_6H_5$ | $-C_2H_4OC_6H_5$ | " |
| 20 | $2-OCH_3$ | $-OCH_3$ | 5-Cl | $2-OCH_3$ | $5-CH_3$ | $-C_6H_5$ | $-C_2H_5$ | " |
| 21 | H | 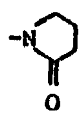 | H | $2-OCH_3$ | $5-OCH_3$ | $-C_6H_5$ | $-CH_2C_6H_5$ | rot |
| 22 | H | " | H | $2-OCH_3$ | $5-OCH_3$ | $-C_6H_5$ | $-C_2H_4OC_6H_5$ | " |
| 23 | H | " | H | $2-OCH_3$ | $5-OCH_3$ | $-C_6H_5$ | $-C_2H_5$ | " |
| 24 | H | $-NO_2$ | H | $2-OCH_3$ | $5-OCH_3$ | $-C_6H_5$ | $-CH_2C_6H_5$ | blaustichig rot |

| Bsp. | $T^1$ | $T^2$ | $T^3$ | $T^4$ | $T^5$ | $T^6$ | $T^7$ | Farbton |
|---|---|---|---|---|---|---|---|---|
| 25 | H | $-NO_2$ | H | $2-OCH_3$ | $5-OCH_3$ | $-C_6H_5$ | $-C_2H_4OC_6H_5$ | blaustichig rot |
| 26 | H | $-NO_2$ | H | $2-OCH_3$ | $5-OCH_3$ | $-C_6H_5$ | $-C_2H_5$ | " |
| 27 | $2-OCH_3$ | $-OCH_3$ | 5-Cl | $2-OCH_3$ | $5-OCH_3$ | $-C_6H_5$ | $-C_2H_5$ | orange |
| 28 | H | H | H | 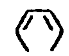 | | $-C_6H_5$ | $-CH_2C_6H_5$ | " |
| 29 | H | H | H | 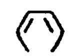 | | $-C_6H_5$ | $-C_2H_4OC_6H_5$ | " |
| 30 | H | H | H | 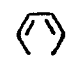 | | $-C_6H_5$ | $-C_2H_5$ | " |
| 31 | H | $-O-CH_2-C_6H_5$ | H | $2-OCH_3$ | $5-OCH_3$ | $-C_6H_5$ | $-CH_2C_6H_5$ | rotorange |
| 32 | H | $-OCH_2-C_6H_5$ | H | $2-OCH_3$ | $5-OCH_3$ | $-C_6H_5$ | $-C_2H_4OC_6H_5$ | " |
| 33 | H | $-OC_2H_4-O-C_6H_5$ | H | $2-OCH_3$ | $5-OCH_3$ | $-C_6H_5$ | $-CH_2C_6H_5$ | rot |
| 34 | H | $-OC_2H_4-O-C_6H_5$ | H | $2-OCH_3$ | $5-OCH_3$ | $-C_6H_5$ | $-C_2H_4OC_6H_5$ | rot |
| 35 | H | $-OCH_2C_6H_5$ | H | $2-OCH_3$ | $5-OCH_3$ | $-C_6H_5$ | $-CH_2C_6H_5$ | orangerot |
| 36 | H | $-OC_2H_5$ | H | $2-OCH_3$ | $5-OCH_3$ | $-C_6H_5$ | $-C_2H_5$ | rot |

| Bsp. | $T^1$ | $T^2$ | $T^3$ | $T^4$ | $T^5$ | $T^6$ | $T^7$ | Farbton |
|---|---|---|---|---|---|---|---|---|
| 37 | H | $-OC_4H_9-(n)$ | H | $2-OCH_3$ | $5-OCH_3$ | $-C_6H_5$ | $-C_4H_9-(n)$ | rot |
| 38 | H | $-OC_6H_5$ | H | $2-OCH_3$ | $5-OCH_3$ | $-OC_2H_5$ | $-CH_2C_6H_5$ | rot |
| 39 | H | $-OC_6H_5$ | H | $2-OCH_3$ | $5-OCH_3$ | $-OC_2H_5$ | $-C_2H_4OC_6H_5$ | rot |
| 40 | H | $-OC_6H_5$ | H | $2-OCH_3$ | $5-OCH_3$ | $-OC_4H_9-(n)$ | $-CH_2C_6H_5$ | orangerot |
| 41 | H | 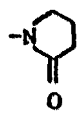 | H | $2-OCH_3$ | $5-OCH_3$ | $-OC_4H_9-(n)$ | $-CH_2C_6H_5$ | rot |
| 42 | H | " | H | $2-OCH_3$ | $5-OCH_3$ | $-OC_4H_9-(n)$ | $-C_2H_4OC_6H_5$ | rot |
| 43 | H | " | H | $2-OCH_3$ | $5-OCH_3$ | $-OC_2H_5$ | $-CH_2C_6H_5$ | rot |
| 44 | H | " | H | $2-OCH_3$ | $5-OCH_3$ | $-OC_2H_5$ | $-C_2H_4OC_6H_5$ | rot |
| 45 | H | " | H | $2-OCH_3$ | $5-OCH_3$ | $-OC_2H_5$ | $-C_4H_9-(n)$ | rot |
| 46 | H | " | H | $2-OCH_3$ | $5-OCH_3$ | $-OC_2H_5$ | $-C_3H_7-(n)$ | rot |
| 47 | H | $-OC_6H_5$ | H | $2-OCH_3$ | $5-OCH_3$ | $-NH-C_4H_9-(n)$ | $-CH_2C_6H_5$ | rotorange |

| Bsp. | $T^1$ | $T^2$ | $T^3$ | $T^4$ | $T^5$ | $T^6$ | $T^7$ | Farbton |
|---|---|---|---|---|---|---|---|---|
| 48 | H | 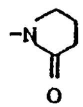 | H | $2-OCH_3$ | $5-OCH_3$ | $-NH-C_4H_9-(n)$ | $-C_4H_9-(n)$ | rot |
| 49 | H | $-OC_6H_5$ | H | $2-OCH_3$ | $5-OCH_3$ | $-OC_2H_4-O-CH_3$ | $-C_4H_9-(n)$ | orangerot |
| 50 | H | $-OC_6H_5$ | H | $2-OCH_3$ | $5-OCH_3$ | $-OC_2H_4OCH_3$ | $-CH_2-C_6H_5$ | orangerot |
| 51 | H | $-OC_6H_5$ | H | $2-OCH_3$ | $5-OCH_3$ | $-OC_2H_4OCH_3$ | $-C_2H_4OC_6H_5$ | orangerot |
| 52 | H | $-O-C_6H_5$ | H | $2-OCH_3$ | $5-OCH_3$ | $-OC_3H_7-(n)$ | $-CH_2C_6H_5$ | orangerot |
| 53 | H | $-OC_6H_5$ | H | $2-OCH_3$ | $5-OCH_3$ | $-OC_3H_7-(n)$ | $-C_2H_4OC_6H_5$ | orangerot |
| 54 | H | $-OC_6H_5$ | H | $2-OCH_3$ | $5-OCH_3$ | $-OC_3H_7-(n)$ | $-C_4H_9-(n)$ | orangerot |
| 55 | H | $-OC_6H_5$ | H | $2-OCH_3$ | $5-OCH_3$ | 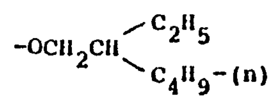 | $-C_4H_9-(n)$ | orangerot |
| 56 | H | $-OC_6H_5$ | H | $2-OCH_3$ | $5-OCH_3$ | 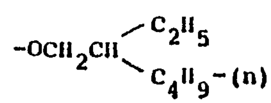 | $-CH_2C_6H_5$ | orangerot |
| 57 | H | $-OC_6H_5$ | H | $2-OCH_3$ | $5-OCH_3$ | 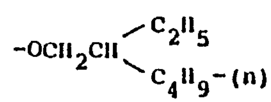 | $-C_2H_4OC_6H_5$ | orangerot |

| Bsp. | $T^1$ | $T^2$ | $T^3$ | $T^4$ | $T^5$ | $T^6$ | $T^7$ | Farbton |
|---|---|---|---|---|---|---|---|---|
| 58 | H | 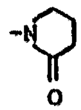 | H | 2-$OCH_3$ | 5-$OCH_3$ | $-OCH_3$ | $-CH_2C_6H_5$ | rot |
| 59 | H | " | H | 2-$OCH_3$ | 5-$OCH_3$ | $-OCH_3$ | $-C_2H_4OC_6H_5$ | rot |
| 60 | H | $-OC_6H_5$ | H | 2-$OCH_3$ | 5-$OCH_3$ | $-OCH_3$ | $-CH_2C_6H_5$ | orangerot |
| 61 | H | $-OC_6H_5$ | H | 2-$OCH_3$ | 5-$OCH_3$ | $-OCH_3$ | $-C_2H_4OC_6H_5$ | orangerot |
| 62 | H | $-OC_6H_5$ | H | 2-$OCH_3$ | 5-$OCH_3$ | $-OCH_3$ | $-C_4H_9$-(n) | orangerot |
| 63 | H | 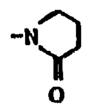 | H | 2-$OCH_3$ | 5-$OCH_3$ | $-OC_2H_4OCH_3$ | $-CH_2C_6H_5$ | rot |
| 64 | H | " | H | 2-$OCH_3$ | 5-$OCH_3$ | $-OC_2H_4OCH_3$ | $-C_2H_4OC_6H_5$ | rot |
| 65 | H | " | H | 2-$OCH_3$ | 5-$OCH_3$ | $-OC_2H_4OCH_3$ | $-OC_6H_9$-(n) | rot |
| 66 | H | " | H | 2-$OCH_3$ | 5-$OCH_3$ | $-OCH_2-CH(C_2H_5)(C_4H_9$-(n)$)$ | $-OC_4H_9$-(n) | rot |
| 67 | H | " | H | 2-$OCH_3$ | 5-$OCH_3$ | " | $-C_2H_4OC_6H_5$ | rot |
| 68 | H | " | H | 2-$OCH_3$ | 5-$OCH_3$ | " | $-CH_2-C_6H_5$ | rot |

| Bsp. | $T^1$ | $T^2$ | $T^3$ | $T^4$ | $T^5$ | $T^6$ | $T^7$ | Farbton |
|---|---|---|---|---|---|---|---|---|
| 69 | H | 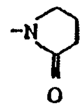 | H | $2-OCH_3$ | $5-OCH_3$ | $-OC_3H_7-(n)$ | $-CH_2-C_6H_5$ | rot |
| 70 | H | " | H | $2-OCH_3$ | $5-OCH_3$ | $-OC_3H_7-(n)$ | $-C_2H_4OC_6H_5$ | rot |
| 71 | H | " | H | $2-OCH_3$ | $5-OCH_3$ | $-OC_3H_7-(n)$ | $-CH_2C_6H_5$ | rot |
| 72 | H | $-OC_6H_5$ | H | $2-OCH_3$ | $5-OCH_3$ | $-N(CH_3)_2$ | $-CH_2C_6H_5$ | orange |
| 73 | H | 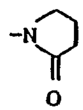 | H | $2-OCH_3$ | $5-OCH_3$ | $-NHC_6H_5$ | $-CH_2C_6H_5$ | rot |

## Patentansprüche

1. Verbindungen der allgemeinen Formel I

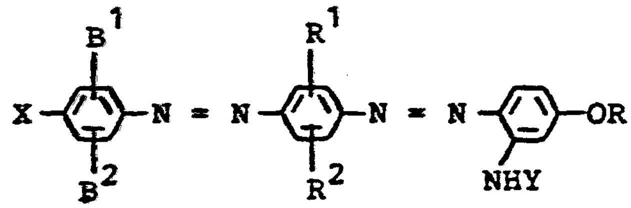

I,

in der

$B^1$ Wasserstoff, Methyl, Ethyl, Methoxy, Ethoxy oder Chlor,

$B^2$ Wasserstoff, Chlor, Brom, Methyl, Ethyl, Methoxy, Ethoxy, Phenoxy, Nitro oder Cyan,

$R^1$ Wasserstoff, Methyl, Ethyl oder $C_1$- bis $C_4$-Alkoxy,

$R^2$ Wasserstoff, Methyl, Ethyl oder $C_1$- bis $C_4$-Alkoxy oder

$R^1$ und $R^2$ zusammen ein annelierter Benzring,

R ein aliphatischer, cycloaliphatischer oder araliphatischer Rest,

X Wasserstoff, Methyl, Chlor, Nitro oder ein Rest der Formel $OR^3$, 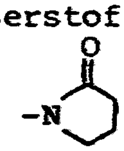 oder 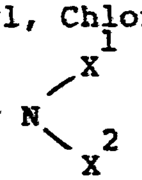 und

Y ein Rest der Formel $-COC_6H_5$, COOR oder 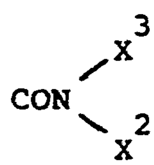 sind, wobei

$R^3$ einen aromatischen Rest oder einen Rest R,

$X^1$ einen Rest der Formel COR, CONHR oder COOR,

$X^2$ Wasserstoff oder gegebenenfalls substituiertes Alkyl oder Phenyl und

$X^3$ Wasserstoff oder gegebenenfalls substituiertes Alkyl bedeuten.

2. Verbindungen gemäß Anspruch 1 der Formel

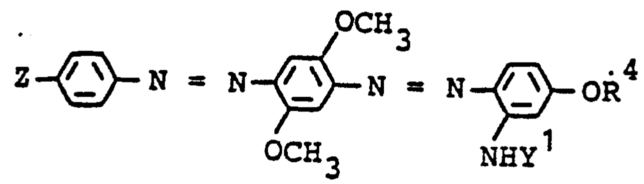

I a,

in der

$R^4$ einen aliphatischen oder araliphatischen Rest,

$Y^1$ einen Rest der Formel $COC_6H_5$, $COOC_1$- bis $C_8$-Alkyl, oder 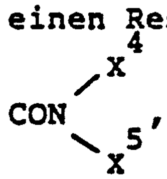, wobei das Alkyl gegebenenfalls durch Sauerstoff unterbrochen sein kann, und

Z $OC_6H_5$ oder 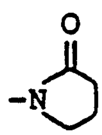 bedeuten, wobei

$X^4$ gegebenenfalls durch Sauerstoff unterbrochenes $C_1$- bis $C_8$-Alkyl oder Phenyl und

$X^5$ Wasserstoff oder $C_1$- bis $C_4$-Alkyl sind.

3. Verwendung der Verbindungen gemäß Anspruch 1 zum Färben von Cellulose oder Polyestern oder Gemischen solcher Fasern.